**Europäisches Patentamt**

**European Patent Office**

**Office européen des brevets**

(11) Veröffentlichungsnummer: **0 253 148**
**B1**

(12) **EUROPÄISCHE PATENTSCHRIFT**

(45) Veröffentlichungstag der Patentschrift:
18.10.89

(21) Anmeldenummer: 87108751.6

(22) Anmeldetag: 19.06.87

(51) Int. Cl.⁴: **B 65 G 15/08, B 65 G 39/02**

(54) Schlauchband-Förderanlage.

(30) Priorität: 17.07.86 DE 3624122

(43) Veröffentlichungstag der Anmeldung:
20.01.88 Patentblatt 88/3

(45) Bekanntmachung des Hinweises auf die Patenterteilung:
18.10.89 Patentblatt 89/42

(84) Benannte Vertragsstaaten:
AT BE CH DE ES FR GB GR IT LI LU NL SE

(56) Entgegenhaltungen:
EP-A- 0 050 962
DE-A- 1 939 568
DE-A- 3 041 126
DE-A- 3 606 129
GB-A- 2 116 931
US-A- 3 550 741

(73) Patentinhaber: Continental Aktiengesellschaft,
Königsworther Platz 1, D-3000 Hannover 1 (DE)

(72) Erfinder: Engst, Wilhelm, Dr., Dietrichstrasse 9,
D-3008 Garbsen 4 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schlauchband-Förderanlage mit einem aus Gummi oder gummiähnlichen Kunststoffen hergestellten Fördergut, der in Gurtlängsrichtung durchlaufende fadenförmige Festigkeitsträger enthält und der durch Überlappen seiner Längsränder zu einem Schlauchband schliessbar ist, das sich ringsum an Tragrollen abstützt, die in Form von Rollengirlanden angeordnet sind, wobei in den schlauchförmig geschlossenen Streckenabschnitten der Förderanlage Rollengirlanden vorgesehen sind, die etwa die untere Hälfte des Schlauchbandquerschnittes umgreifen, sowie Rollengirlanden, die etwa die obere Hälfte des Schlauchbandquerschnittes umgreifen.

Eine solche Anlage wird in der älteren Patentanmeldung EP-A-0194509 beschrieben, die zum Stand der Technik gemäss Artikel 54(3) EPÜ gehört.

Schlauchband-Förderanlagen sind beispielsweise in der DE-PS 943 817, der DE-OS 1 934 342 und der DE-PS 2 944 448 beschrieben. Bei den bekannten Anlagen dieser Art hatte es sich als nachteilig erwiesen, dass die Trag- und Führungsrollen, an denen sich der Fördergut abstützte und die den Fördergut in die Schlauchform führten, starr und in unveränderlicher symmetrischer Verteilung um den Gurtquerschnitt herum angeordnet waren. Infolge dieser starren Rollenanordnung wurde dem Fördergut ständig ein bestimmter durch die Position der Rollen exakt vorgegebener Schlauchquerschnitt aufgezwungen, und zwar unabhängig von der Form und Verteilung des jeweils transportierten Fördergutes. Insbesondere bei sperrigem Fördergut wurde hierbei das Gurtmaterial stark beansprucht, und es konnte zu Beschädigungen des Gurtes kommen. Ausserdem wiesen die bekannten Schlauchband-Förderanlagen den Mangel auf, dass die Montage des Fördergutes ebenso wie Wartungs- und Reparaturarbeiten einen hohen Aufwand erforderten, da der Fördergut durch die ihn rahmenartig umschliessenden Traggestelle, an denen die Rollen fest montiert waren, nur schwer zugänglich war.

Zur Vermeidung dieser Nachteile wurde gemäss der EP-A-0194509 eine Gurt-Förderanlage vorgeschlagen, deren Tragrollen in Form an sich bekannter Rollengirlanden angeordnet waren, wobei in den schlauchförmig geschlossenen Abschnitten der Förderanlage je eine Rollengirlande etwa die obere bzw. die untere Hälfte des Schlauchbandquerschnittes umgriffen. Vorzugsweise wurde dabei jeweils einer unteren Rollengirlande eine obere Rollengirlande zugeordnet, die ihr entweder genau oder mit geringer Versetzung in Gurtlängsrichtung gegenüberlag.

Die Erfindung gemäss der EP-A-0194509 berücksichtigte in einer vorteilhaften Ausgestaltung auch bereits die Tatsache, dass bei den bis dahin bekannten Schlauchband-Förderanlagen infolge von deren starrer Anordnung der Tragrollen die Längskante des bei der Schlauchbildung übergeschlagenen Gurtrandes häufig mit der Stirnseite der nächsten seitlichen Tragrolle kollidierte, wodurch es auf die Dauer zu Beschädigungen dieser Gurtlängskante kommen konnte, was dann aufwendige Reparaturen oder sogar das Auswechseln des gesamten Gurtes erforderlich machte.

Zur Lösung dieses Problems war gemäss der EP-A-0194509 vorgeschlagen worden, an den oberen Rollengirlanden jeweils zwischen denjenigen zwei Rollen, die beiderseits der Längskante des übergeschlagenen Gurt-Randbereichs zur Anlage kommen, einen grösseren Abstand vorzusehen als zwischen den übrigen Rollen. Hierdurch wurde verhindert, dass diese Gurtlängskante bei leichten Schwankungen oder Verdrehungen des laufenden Schlauchbandes gegen die Stirnseite der ihr seitlich benachbarten Rolle stiess und dabei beschädigt wurde. Dieser vergrösserte Rollenabstand wurde insbesondere dadurch realisiert, dass zwischen den beiden besagten, beiderseits der Gurtlängskante angeordneten Rollen ein Verbindungsglied eingefügt wurde, das länger war als die übrigen Rollenzwischenglieder der oberen Girlande, wobei die Rollen selbst alle dieselben Abmessungen aufwiesen.

Wie die Erfahrung inzwischen gezeigt hat, ist diese Massnahme jedoch nicht in allen Fällen geeignet oder ausreichend, um das Anlaufen der Gurtkante gegen die Stirnseite der nächsten seitlichen Tragrolle unter allen in der Praxis auftretenden Betriebszuständen — insbesondere bei engem Kurvenverlauf der Anlage oder stark schwankender Beladung des Gurtes — immer sicher zu vermeiden.

Erfindungsgemäss wird daher als Alternative oder in Ergänzung zu der vorstehend erwähnten Vergrösserung des Rollenabstandes in der oberen Girlande nach der EP-A-0194509 vorgeschlagen, die der Gurtkante nächste seitliche Tragrolle entsprechend dem kennzeichnenden Teil des Anspruchs 1 der vorliegenden Anmeldung zu gestalten.

Durch die erfindungsgemässe axiale Verlängerung des Mantels der besagten seitlichen Tragrolle befindet sich das Rollenende in einem grösseren radialen Abstand zur Aussenwand des schlauchförmigen Gurtes, und es wird erreicht, dass bei Verdrehungen des Gurtes um seine Längsachse die freiliegende Gurtkante in aller Regel nicht gegen die Stirnseite der Rolle anläuft, sondern sich gleitend unter den glattwandig-zylindrischen Rollenmantel schiebt und unter diesem abläuft. Vorzugsweise erstreckt sich die Verlängerung des Rollenmantels so weit, dass sie das Girlandengelenk, über das diese Rolle mit ihrer Nachbarrolle gelenkig verbunden ist, überragt — selbstverständlich jedoch nur in dem Masse, wie die einwandfreie Funktion dieses Gelenkes hierduch nicht beeinträchtigt wird.

In einer besonders vorteilhaften Ausführungsform ist die Rollenmantelverlängerung nicht durchgehend zylindrisch ausgebildet, sondern verjüngt sich in Richtung ihres freien Endes, und zwar vorzugsweise um mindestens 20%. Hierdurch sind die Voraussetzungen dafür, dass die freiliegende Gurtkante bei einer Gurtverdrehung sich stossfrei unter die Seitenrolle schiebt — oder anders gesagt: dass die Seitenrolle über die Gurtkante hinwegrollt – zusätzlich verbessert. Dabei ist es sinnvoll, den Rollenmantel stetig von seinem zylindrischen Teil in die Verjüngung übergehen zu lassen und ihn am Ende der Verlängerung so abzurunden, dass er senkrecht zur Rollenachse ausläuft. Eine erfindungsgemässe Ausführungsform dieser Art ist vorteilhaft dadurch gekennzeichnet, dass die Form der Verjüngung im axialen Längsschnitt der Rolle einem Viertelkreis entspricht, der einerseits in die achsparallele Einhüllende des zylindrischen Rollenkörpers übergeht und andererseits senkrecht zur Rollenachse ausläuft und dessen Radius 20 bis 50% des Radius des zylindrischen Rollenteils beträgt.

Bei einer – insbesondere bezüglich des Herstellungsaufwandes – besonders günstigen Realiserungsform der vorliegenden Erfindung ist die Rollenmantelverlängerung nicht einstückig mit der übrigen Rolle, sondern als ein an die Stirnseite des zylindrischen Teils der Rolle angesetzter Ringkörper ausgebildet. Hierdurch ergeben sich auch vielfältige Möglichkeiten, die Kontur der Rollenverlängerung bei Bedarf ohne grossen Aufwand zu verändern und unterschiedlichen Gegebenheiten anzupassen. Insbesondere schafft diese bevorzugte Ausführungsform der Erfindung die Voraussetzung dafür, dass die erfindungsgemäss verlängerte Seitenrolle in kostensparender Weise aus einer den übrigen Girlandenrollen gleichenden zylindrischen Rolle und einer in Form eines Ringkörpers an diese angesetzten Verlängerung zusammengesetzt sein kann.

Die Zeichnung erläutert die vorliegende Erfindung anhand einer stark vereinfachten Darstellung ihrer wesentlichen Merkmale, und zwar zeigen

Fig. 1 einen Querschnitt durch eine erfindungsgemässe Schlauchband-Förderanlage und

Fig. 2 eine teilweise gebrochene Seitenansicht einer erfindungsgemäss verlängerten Seitenrolle einer solchen Anlage.

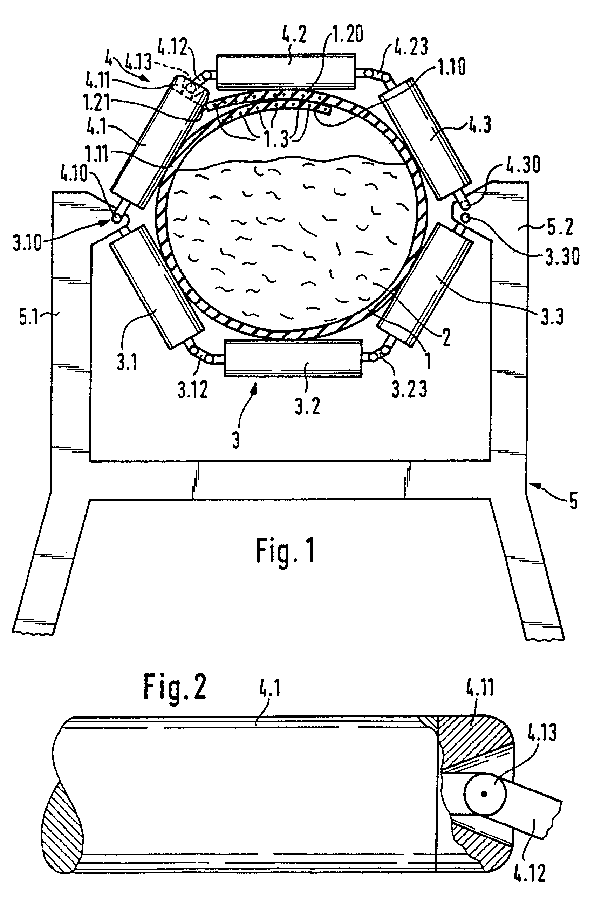

Wie Fig. 1 zeigt, ist der zu einem Schlauchband geformte und das Fördergut 2 einschliessende Fördergut 1, der in bekannter Weise z. B. aus einem synthetischen Kautschuk hergestellt ist, an der unteren Hälfte seines Querschnitts durch die Rollen 3.1, 3.2 und 3.3 einer unteren Rollengirlande 3 abgestützt, während die obere Hälfte seines Querschnitts durch die Rollen 4.1, 4.2 und 4.3 einer oberen Rollengirlande 4 so geführt wird, dass die Gurtränder 1.10 und 1.20 einander überlappen. Der Fördergut enthält – insbesondere in seinen einander überlappenden Randbereichen 1.10 und 1.20 – eingebettete, in Längsrichtung durchlaufende Festigkeitsträger 1.3, z. B. in der Form von Stahldrahtseilen. Der Mittelteil des Gurtes kann übliche in Quer- und/oder Stahldrahtseilen. Der Mittelteil des Gurtes kann übliche in Quer- und/oder Diagonalrichtung verlaufende, in der Zeichnung nicht dargestellte Verstärkungseinlagen enthalten, die als Durchschlagschutz dienen und die Tragfähigkeit des Gurtes erhöhen. Die Rollengirlanden 3 und 4 sind an den Schenkeln 5.1 und 5.2 des Traggestells 5 gelenkig gelagert, und die auf ihren Achsen drehbaren Rollen sind über Zwischenglieder 3.12, 3.23 bzw. 4.12, 4.23 gelenkig miteinander verbunden.

Gemäss der vorliegenden Erfindung weist die an der Gurtseitenwandung abrollende, der freiliegenden Gurtlängskante benachbarte Rolle 4.1 eine an ihrem Stirnende abgerundete Verlängerung 4.11 auf, die sich in bevorzugter Weise bis über das Gelenk 4.13 erstreckt. Wie in der Fig. 1 erkennbar ist, die den schlauchförmigen Gurt 1 in leicht verdrehter Lage zeigt, kann die freiliegende Gurtkante 1.21 hierdurch nicht mehr gegen eine scharfkantige Stirnseite der Rolle 4.1 anlaufen. Stattdessen wird die Gurtkante 1.21 durch das abgerundete stirnseitige Ende der Rollenverlängerung gleitend unter die Rolle 4.1 geführt, wobei jegliche scharfkantige Beanspruchung der Gurtkante vermieden wird.

Fig. 2 verdeutlicht die Erfindung am Beispiel einer in grösserem Massstab dargestellten bevorzugten Ausführungsform der Seitenrolle 4.1 (Patentansprüche 6ff): An eine zylindrische Rolle 4.1, die den übrigen Rollen der Rollengirlanden gleicht, ist ein an seinem freien Ende sphärisch abgerundeter Ringkörper 4.11 angesetzt, der das Girlanden-Gelenk 4.13 und einen Teil des hieran angesetzten Verbindungsgliedes 4.12 überragt.

## Patentansprüche

1. Schlauchband-Förderanlage mit einem aus Gummi oder gummiähnlichen Kunststoffen hergestellten Fördergut, der in Gurtlängsrichtung durchlaufende fadenförmige Festigkeitsträger enthält und der durch Überlappen seiner Längsränder zu einem Schlauchband schliessbar ist, das sich ringsum an Tragrollen (3.1, 3.2, 3.3; 4.1, 4.2, 4.3) abstützt, die in Form von Rollengirlanden angeordnet sind, wobei in den schlauchförmig geschlossenen Streckenabschnitten der Förderanlage Rollengirlanden (3) vorgesehen sind, die etwa die untere Hälfte des Schlauchbandquerschnittes umgreifen, sowie Rollengirlanden (4), die etwa die obere Hälfte des Schlauchbandquerschnittes umgreifen, wobei die Rolle (4.1), die entlang der Längskante (1.21) des übergeschlagenen Gurt-Randbereichs (1.20) auf derjenigen Seitenwandung (1.11) des Gurtes (1) abrollt, deren Rand (1.10) im Überlappungsbereich untergeschlagen ist, an ihrer der Längskante (1.21) zugewandten Stirnseite eine Verlängerung (4.11) ihrer Mantelfläche aufweist, die sich mindestens bis an das Gelenk (4.13) erstreckt, über das die Rolle (4.1) mit der nächsten Rolle (4.2) verbunden ist, die auf dem übergeschlagenen Gurt-Randbereich (1.20) abrollt.

2. Förderanlage nach Anspruch 1, dadurch gekennzeichnet, dass die Verlängerung (4.11) das Gelenk (4.13) überragt.

3. Förderanlage nach Anspruch 1 oder 2, dadurch gekennzeichnet, dass die Rolle (4.1) sich im gesamten Bereich oder im Endbereich der Verlängerung (4.11) in Richtung ihres freien Endes stetig verjüngt.

4. Förderanlage nach Anspruch 3, dadurch gekennzeichnet, dass die radiale Verjüngung mindestens 20% des Radius des zylindrischen Teils der Rolle (4.1) beträgt.

5. Förderanlage nach Anspruch 3 oder 4, dadurch gekennzeichnet, dass die Mantelfläche der Rolle (4.1) und ihrer Verlängerung (4.11) stetig vom zylindrischen Bereich in den Verjüngungsbereich übergeht und am freien Ende der Verlängerung (4.11) senkrecht zur Rollenachse ausläuft.

6. Förderanlage nach Anspruch 5, dadurch gekennzeichnet, dass die Form der Verjüngung im axialen Längsschnitt der Rolle (4.1) einem Viertelkreis entspricht, der einerseits in die achsparallele Einhüllende des zylindrischen Rollenkörpers übergeht und andererseits senkrecht zur Rollenachse ausläuft und dessen Radius 20 bis 50% des Radius des zylindrischen Teils der Rolle (4.1) beträgt (Fig. 2).

7. Förderanlage nach einem der Ansprüche 1 bis 6, dadurch gekennzeichnet, dass die Verlängerung (4.11) als ein an die Stirnseite des zylindrischen Teils der Rolle (4.1) angesetzter Ringkörper ausgebildet ist.

8. Förderanlage nach Anspruch 7, dadurch gekennzeichnet, dass die Rolle (4.1) aus einer den übrigen Rollen (4.2, 4.3; 3.1, 3.2, 3.3) gleichenden zylindrischen Rolle und einer in Form eines Ringkörpers an diese angesetzten Verlängerung (4.11) besteht.

## Claims

1. Tubular belt conveyor having a conveyor belt, which is made of rubber or rubber-like plastics materials and contains filamentary reinforcing members which extend in the longitudinal direction of the belt, the conveyor belt being closable by overlapping its longitudinal edges to form a tubular belt which is supported all-around by supporting rollers (3.1, 3.2, 3.3; 4.1, 4.2, 4.3) which are disposed in the form of roller garlands, roller garlands (3) being provided in the path sections of the conveyor, which are closed in a tubular manner, and surrounding substantially the lower half of the cross-section of the tubular belt, and roller garlands (4) being provided which surround substantially the upper half of the cross-section of the tubular belt, wherein the roller (4.1), which rolls along the longitudinal edge (1.21) of the looped-over edge region (1.20) of the belt on that particular lateral wall (1.11) of the belt (1) where its edge (1.10) is looped-under in the overlapping region, has an extension (4.11) of its surface at its end face facing the longitudinal edge (1.21), which extension extends at least to the pivot joint (4.13), via the intermediary of which the roller (4.1) is connected to the next roller (4.2) which rolls on the looped-over edge region (1.20) of the belt.

2. Conveyor according to claim 1, characterised in that the extension (4.11) protrudes beyond the pivot joint (4.13).

3. Conveyor according to claim 1 or 2, characterised in that the roller (4.1) tapers continuously in the entire region or in the end region of the extension (4.11) in the direction of its free end.

4. Conveyor according to claim 3, characterised in that the radial tapering amounts to at least 20% of the radius of the cylindrical portion of the roller (4.1).

5. Conveyor according to claim 3 or 4, characterised in that the surface of the roller (4.1) and of its extension (4.11) extends continuously from the cylindrical region into the tapering region and tapers-off, at the free end of the extension (4.11), in a direction perpendicular to the roller axis.

6. Conveyor according to claim 5, characterised in that the form of the tapering in the axial longitudinal cross-section of the roller (4.1) corresponds to a quadrant which, on the one hand, extends into the axis-parallel covered end of the cylindrical roller body and, on the other hand, extends in a direction perpendicular to the roller axis, and its radius (i.e. radius of quadrant) amounts to 20 to 50% of the radius of the cylindrical portion of the roller (4.1) (Fig. 2).

7. Conveyor according to one of claims 1 to 6, characterised in that the extension (4.11) is an annular body attached to the end face of the cylindrical portion of the roller (4.1).

8. Conveyor according to claim 7, characterised in that the roller (4.1) is formed from a cylindrical roller, which is identical to the other rollers (4.2, 4.3; 3.1, 3.2, 3.3), and from an extension (4.11) which is attached to said cylindrical roller in the form of an annular body.

## Revendications

1. Installation de transport à bande tubulaire comportant une bande convoyeuse, qui est réalisée en caoutchouc ou en des matières plastiques semblables au caoutchouc, contient des éléments de rigidification en forme de fils s'étendant dans la direction longitudinale de la bande et peut être fermée sur elle-même, par chevauchement de ses bords longitudinaux, pour former une bande tubulaire, qui prend appui, au niveau de son pourtour, sur des rouleaux de support (3.1, 3.2, 3.3; 4.1, 4.2, 4.3) agencés sous la forme de guirlandes de rouleaux, et dans laquelle il est prévu, dans les sections de longueur, fermées en forme de tuyaux, de l'installation de transport, des guirlandes de rouleaux (3) entourant approximativement la moitié inférieure de la section transversale de la bande tubulaire, ainsi que des guirlandes de rouleaux (4), entourant approximativement la moitié supérieure de la section transversale de la bande tubulaire, et dans laquelle le rouleau (4.1), qui roule le long du bord longitudinal (1.21) de la partie marginale en chevauchement (1.20) de la bande, sur la paroi latérale (1.11) de la bande (1) et dont le bord (1.10) est recouvert dans la zone de chevauchement, possède, sur sa face frontale tournée vers le bord longitudinal (1.21), un prolongement (4.11)

de sa surface enveloppe, qui s'étend au moins jusqu'à l'articulation (4.13), par l'intermédiaire de laquelle le rouleau (4.1) est relié au rouleau immédiatement suivant (4.2), qui roule sur la zone marginale en chevauchement (1.20) de la bande.

2. Installation de transport selon la revendication 1, caractérisée en ce que le prolongement (4.11) est en saillie par rapport à l'articulation (4.3).

3. Installation de transport selon la revendication 1 ou 2, caractérisée en ce que le rouleau (4.1) se rétrécit de façon continue dans l'ensemble de la zone ou dans la zone d'extrémité du prolongement (4.11), en direction de l'extrémité libre du rouleau.

4. Installation de transport selon la revendication 3, caractérisée en ce que le rétrécissement radial est égal à au moins 20% du rayon de la partie cylindrique du rouleau (4.1).

5. Installation de transport selon la revendication 3 ou 4, caractérisée en ce que la surface enveloppe du rouleau (4.1) et son prolongement (4.11) sont réunis d'une manière continue l'une à l'autre et s'étendent perpendiculairement à l'axe du rouleau, au niveau de l'extrémité libre du prolongement (4.11).

6. Installation de transport selon la revendication 5, caractérisée en ce que la forme du rétrécissement dans la coupe axiale longitudinale du rouleau (4.1) correspond à un quart de cercle, qui d'une part se prolonge par l'enveloppe, parallèle à l'axe, du corps cylindrique du rouleau et d'autre part se termine perpendiculairement à l'axe du rouleau et dont le rayon est égal à une valeur comprise entre 20 et 50% du rayon de la partie cylindrique du rouleau (4.1) (figure 2).

7. Installation de transport selon l'une des revendications 1 à 6, caractérisée en ce que le prolongement (4.11) est réalisé sous la forme d'un corps annulaire installé sur la face frontale de la partie cylindrique du rouleau (4.1).

8. Installation de transport suivant la revendication 7, caractérisée en ce que le rouleau (4.1) est constitué par un rouleau cylindrique identique aux autres rouleaux (4.2, 4.3; 3.1, 3.2, 3.3) et par un prolongement (4.11) rapporté, sous la forme d'un corps annulaire, sur ce rouleau.

Fig. 1

Fig. 2